# FASCICULE DE BREVET EUROPEEN

(11) **EP 3 095 695 B1**
(45) Date de publication et mention de la délivrance du brevet: **26.06.2019**
(21) Numéro de dépôt: 16167495.7
(22) Date de dépôt: 28.04.2016
(51) Int. Cl.: B64C 27/12, B64D 27/02

(54) **PROCEDE POUR ACTIVER UN MOTEUR ELECTRIQUE D'UNE INSTALLATION HYBRIDE D'UN AERONEF MULTIMOTEUR, ET UN AERONEF**
BETÄTIGUNGSVERFAHREN EINES ELEKTROMOTORS EINER HYBRIDANLAGE EINES MEHRMOTORIGEN LUFTFAHRZEUGS, UND ENTSPRECHENDES LUFTFAHRZEUG
A METHOD OF ACTIVATING AN ELECTRIC MOTOR IN A HYBRID POWER PLANT OF A MULTI-ENGINED AIRCRAFT, AND AN AIRCRAFT

(30) Priorité: 15.05.2015 FR 1501001
(43) Date de publication de la demande: 23.11.2016
(73) Titulaire: Airbus Helicopters, 13725 Marignane Cedex (FR)
(72) Inventeur: ROSSOTTO, Régis, 13012 MARSEILLE (FR)
(74) Mandataire: GPI & Associés

(56) Documents cités:
- FR-A1- 2 978 124
- FR-A1- 2 997 382
- FR-A1- 2 998 542
- US-A1- 2014 034 781

## Description

La présente invention concerne un procédé pour activer un moteur électrique d'une installation motrice hybride d'un aéronef multimoteur, et un aéronef appliquant ce procédé.

Un aéronef peut comporter une installation motrice hybride munie d'une pluralité de moteurs. En particulier, un giravion est muni d'au moins un moteur pour mettre en rotation au moins un rotor au travers d'au moins une boîte de transmission de puissance.

Une installation motrice possède par exemple au moins deux moteurs thermiques. De plus, l'installation motrice est éventuellement équipée d'au moins un moteur électrique apte à apporter un complément de puissance.

Une telle installation motrice est alors dénommée « installation motrice hybride » en raison de la présence de moteurs thermiques et d'un moteur électrique.

L'utilisation d'un moteur électrique sur un véhicule, et en particulier un aéronef pose des difficultés. En effet, l'énergie électrique peut être stockée dans des batteries, mais ces batteries présentent une masse préjudiciable.

Dès lors, le gain de puissance apporté par un moteur électrique peut être affecté par la présence de batteries lourdes pour alimenter un tel moteur électrique.

Le document FR2998542 décrit un aéronef à voilure tournante muni de trois moteurs, et un procédé de contrôle de cet aéronef.

L'aéronef comporte notamment deux moteurs principaux et un système principal de régulation régulant ces moteurs principaux selon une consigne de vitesse variable. De plus, l'aéronef inclut un moteur secondaire, un système secondaire de régulation régulant le moteur secondaire selon une consigne constante. Le système secondaire de régulation est indépendant du système principal de régulation.

Les moteurs principaux sont des moteurs thermiques, le moteur secondaire pouvant être un moteur électrique.

Le moteur secondaire peut être démarré voire utilisé en permanence au cours d'un vol, ou utilisé par intermittence selon des procédures alternatives. En particulier le moteur secondaire est inhibé en vol lorsque l'aéronef évolue à une vitesse d'avancement supérieure à un seuil de vitesse.

Le document FR2962404 décrit une architecture pour un aéronef à voilure tournante à motorisation hybride. Cette architecture est munie de moteurs à combustion reliés à une boîte de transmission de puissance. De plus, l'architecture comporte une machine électrique qui est également en prise mécanique sur la boîte de transmission.

Le document WO2014009620 décrit une architecture munie de deux moteurs principaux. L'architecture comporte en outre un moteur auxiliaire relié aux moteurs principaux.

Le document US8727271 décrit un aéronef muni d'un turbomoteur. Le turbomoteur est relié à un générateur électrique. Ce générateur électrique alimente alors un moteur électrique apte à mettre en rotation un rotor ou une hélice.

De plus, l'aéronef comporte des batteries aptes à alimenter le moteur électrique.

Le document EP2148066 décrit une installation munie d'un moteur électrique pour démarrer un turbomoteur. Le moteur électrique peut fonctionner en vol en mode générateur de courant électrique, ou en mode moteur pour participer à l'entraînement d'une boîte de transmission de puissance.

Le document FR 2978124 décrit un procédé de contrôle d'un groupe de moteurs développant une puissance requise pour entraîner un rotor. Ce groupe de moteurs est muni d'au moins un organe électrique, d'un moyen de stockage électrique et d'un premier nombre de moteurs thermiques supérieur ou égal à deux. Une unité de traitement exécute des instructions pour évaluer une condition principale selon laquelle le groupe de moteurs peut développer la puissance requise en mettant au repos un moteur thermique, et le cas échéant pour mettre au repos un moteur thermique et accélérer un deuxième nombre de moteurs thermiques non mis au repos, et pour faire fonctionner l'organe électrique en mode moteur si nécessaire, l'organe électrique fonctionnant temporairement en mode générateur électrique quand le moyen de stockage est déchargé.

Le document FR 2997382 décrit un procédé de gestion d'une panne moteur sur un aéronef à voilure tournante comportant une installation motrice hybride munie d'au moins deux moteurs thermiques, d'au moins une machine électrique et d'une boîte de transmission principale de puissance. Selon ce procédé, on surveille pendant chaque vol le fonctionnement des moteurs thermiques afin de détecter une panne de l'un d'entre eux.

Le document US 2014/0034781 est aussi connu.

La présente invention a alors pour objet de proposer un procédé pour activer un moteur électrique d'une installation motrice hybride selon la revendication 1.

L'invention concerne donc un procédé pour entraîner en rotation un rotor d'un aéronef, cet aéronef comportant au moins deux moteurs thermiques et un moteur électrique aptes à entraîner en rotation ce rotor.

Ce procédé est notamment remarquable en ce que les étapes suivantes sont réalisées successivement :
- on entraîne le rotor en sollicitant les moteurs thermiques conjointement,
- on génère une autorisation uniquement durant au moins une phase de vol prédéterminée, cette autorisation autorisant l'utilisation du moteur électrique afin d'entraîner en rotation le rotor ladite au moins une phase de vol prédéterminée comportant une phase de vol à basse vitesse durant laquelle ledit aéronef a une vitesse d'avancement inférieure à une vitesse d'avancement seuil,
- lorsque ladite autorisation est générée, on génère un ordre de fonctionnement pour requérir le fonctionnement du moteur électrique si un des moteurs thermiques est considéré en panne,
- lorsque l'ordre de fonctionnement est généré, on entraîne le rotor conjointement avec chaque moteur thermique qui n'est pas considéré en panne et le moteur électrique.

Par suite, l'aéronef comporte au moins deux moteurs thermiques et un moteur électrique pouvant tous participer à la mise en mouvement d'un rotor. Un tel rotor est un rotor pouvant participer à la sustentation et/ou à la propulsion de l'aéronef.

Le procédé selon l'invention détermine précisément dans quelles conditions le moteur électrique est sollicité pour participer à l'entraînement en rotation du rotor.

En effet, ce procédé ne prévoit pas d'entrainer en permanence le rotor en utilisant le moteur électrique.

En outre ce procédé ne prévoit pas d'entraîner obligatoirement le rotor avec au moins le moteur électrique suite à une panne d'un moteur.

De même, ce procédé ne prévoit pas d'entraîner obligatoirement le rotor au moins avec le moteur électrique lorsque l'aéronef se situe dans une phase de vol prédéterminée.

En effet, selon ce procédé, le rotor est entraîné dans des conditions normales par les moteurs thermiques. Durant une étape dite « étape initiale » par commodité, les moteurs thermiques sont alors tous sollicités pour mettre en mouvement le rotor.

Durant une étape d'estimation de la phase de vol, des systèmes de l'aéronef déterminent si l'aéronef évolue dans une phase de vol prédéterminée.

Une phase de vol prédéterminée représente une phase de vol durant laquelle le moteur électrique est susceptible d'apporter un gain de puissance favorable. Le constructeur peut déterminer par essais, simulations, calculs ou expérience la nature de ces phases de vol.

Le moteur électrique ne peut donc être utilisé que durant ces phases de vol prédéterminées.

Néanmoins, une telle condition n'est pas suffisante pour activer le moteur électrique.

Dès lors, l'étape d'estimation de la phase de vol consiste à uniquement générer une autorisation d'utilisation du moteur électrique lorsque l'aéronef évolue dans une phase de vol prédéterminée. Cette autorisation signifie simplement que le moteur électrique peut être utilisé si nécessaire.

Par suite, durant une étape d'estimation de la santé des moteurs thermiques, des systèmes de l'aéronef déterminent si un moteur thermique doit être considéré en panne.

L'expression « si un moteur thermique est considéré en panne » est à interpréter au sens large. Cette expression signifie qu'un moteur thermique ne fonctionne pas de manière optimale, par exemple en délivrant une puissance inférieure à la puissance pouvant être normalement délivrée par ce moteur. Ainsi, un moteur thermique peut être considéré en panne si ce moteur thermique a été arrêté involontairement, si ce moteur thermique a été arrêté volontairement ou si un dysfonctionnement est détecté.

L'expression « si un moteur thermique est considéré en panne » se rapproche donc du sens donné à l'expression « mettre en panne » dans le domaine maritime.

Si un moteur thermique est considéré en panne et si une autorisation d'utiliser le moteur électrique a été rendue, alors un ordre de fonctionnement est élaboré.

Cet ordre de fonctionnement est ensuite transmis au moteur électrique pour requérir le fonctionnement du moteur électrique afin d'entraîner en rotation le rotor durant une étape d'hybridation.

Par conséquent, le procédé selon l'invention prévoit une séquence d'activation claire conduisant au fonctionnement du moteur électrique que dans des circonstances particulières. Deux conditions doivent simultanément être remplies pour que le moteur électrique soit utilisé, à savoir une première condition relative à la phase de vol courante et une deuxième condition relative au fonctionnement des moteurs thermiques.

L'invention consiste d'une part à détecter si un moteur thermique ne fonctionne pas de manière optimale et, d'autre part, à détecter si la phase de vol courante est une phase de vol nécessitant un apport de puissance supplémentaire. La combinaison de ces deux informations est nécessaire pour activer le moteur électrique.

Par conséquent, le moteur électrique ne peut être utilisé en mode moteur pour entraîner un rotor que dans des conditions particulières se produisant rarement en vol.

En particulier, le moteur électrique n'est pas sollicité pour entraîner le rotor si l'apport de puissance généré par le moteur électrique n'est pas nécessaire.

Dès lors, le moteur électrique peut être dimensionné pour avoir une taille restreinte et consommer une énergie électrique restreinte. Le procédé selon l'invention permet ainsi un agencement d'un moteur électrique sur un aéronef qui peut être moins pénalisant d'un point de vue massique et en termes d'encombrement, que l'agencement d'un moteur électrique susceptible d'être souvent sollicité.

Ce procédé peut de plus comporter une ou plusieurs des caractéristiques qui suivent.

Par exemple, l'aéronef comportant un système de gestion par moteur thermique ainsi qu'un système avionique communiquant avec les systèmes de gestion, l'autorisation est générée par le système avionique, cette autorisation étant transmise à chaque système de gestion, l'ordre de fonctionnement étant émis par un système de gestion et transmis au moteur électrique.

Classiquement un moteur peut être contrôlé par un système de gestion. Par exemple, un système de gestion d'un turbomoteur comporte notamment un calculateur et un doseur de carburant. Un tel système de gestion peut alors être un système connu sous l'acronyme « FADEC » et l'expression anglaise « Full Authority Digital Engine Control ».

Un aéronef comporte de plus un système dénommé parfois « système avionique ». Un système avionique comporte les équipements électroniques, électriques et informatiques qui aident au pilotage des aéronefs.

Dès lors, le système avionique a pour fonction de détecter si l'aéronef évolue dans une phase de vol prédéterminée susceptible d'autoriser le fonctionnement du moteur électrique.

Dans l'affirmative, le système avionique envoie l'autorisation aux systèmes de gestion. Dès lors, si un système de gestion considère qu'un moteur thermique est en panne, ce système de gestion émet l'ordre de fonctionnement.

Cet ordre de fonctionnement peut être transmis directement au moteur électrique par le système de gestion, ou indirectement via le système avionique.

Ce procédé est alors relativement simple et permet de bien définir les étapes à successivement mettre en oeuvre pour activer un moteur électrique, à savoir pour utiliser le moteur électrique afin d'entraîner en rotation un rotor.

Par ailleurs, si un moteur thermique est considéré en panne et, si ladite autorisation n'est pas donnée, le moteur électrique n'est pas sollicité pour entraîner le rotor.

Lors d'une itération au cours du fonctionnement de l'installation motrice, un système de gestion peut considérer qu'un moteur thermique est en panne.

Si à l'itération précédente le système avionique a émis une « autorisation », alors le système de gestion génère l'ordre de fonctionnement pour ordonner le fonctionnement du moteur électrique.

Par contre, si à l'itération précédente le système avionique n'a pas émis cette « autorisation », alors le système de gestion ne génère pas l'ordre de fonctionnement.

Par ailleurs, chaque phase de vol prédéterminée peut être une phase de vol qui nécessite une puissance donnée pour entraîner le rotor, cette puissance donnée étant inférieure à la puissance maximale délivrée par les moteurs thermiques lorsqu'un des moteurs thermiques est considéré en panne.

La puissance donnée peut représenter une puissance minimale à fournir pour assurer le vol, ou encore une puissance minimale majorée d'une marge de sécurité.

A chaque itération de calcul, le système avionique détermine dans ces conditions si la phase de vol courante est une phase de vol qui nécessiterait un apport de puissance supplémentaire si un moteur thermique devait être considéré en panne. Dans l'affirmative, l'autorisation est émise pour garantir la sécurité du vol si un moteur thermique devait être considéré en panne dans le futur.

Par ailleurs et selon une variante, l'autorisation est inhibée lorsque l'aéronef repose sur le sol.

Le terme « sol » doit être interprété au sens large en couvrant aussi bien une surface solide qu'une surface liquide. Le sol fait donc par exemple référence aussi bien à de la terre qu'à de l'eau. En effet, certains aéronefs ont la faculté d'amerrir.

Selon cette variante, aucune autorisation n'est alors délivrée au sol. En effet, l'aéronef ne risque pas de s'écraser lorsque cet aéronef repose sur le sol. Par suite, ce procédé peut prendre le partie de ne jamais solliciter le moteur électrique dans cette configuration.

Par ailleurs, une phase de vol prédéterminée comporte une phase de vol dite « phase de vol à basse vitesse » durant laquelle ledit aéronef a une vitesse d'avancement inférieure à une vitesse d'avancement seuil.

La vitesse d'avancement seuil est de l'ordre de 50 Kts (noeuds ou « Knot » en langue anglaise) par exemple.

Le système avionique détermine la vitesse d'avancement de l'aéronef. Cette vitesse d'avancement peut être par exemple la vitesse vraie de l'aéronef dite « True Air Speed » en langue anglaise, ou encore la vitesse air indiquée connue sous l'acronyme « IAS » correspondant à l'expression anglaise « Indicated Air Speed ».

Selon les études de performances de la demanderesse, la puissance à délivrer par une installation motrice d'un giravion augmente lorsque la vitesse d'avancement diminue dans le domaine des basses vitesses. Ainsi, à faible vitesse de vol, par exemple lors d'un vol en stationnaire voire en montée ou en descente, la puissance nécessaire en cas de panne d'un moteur thermique est plus importante qu'à forte vitesse. Le procédé selon l'invention autorise alors le fonctionnement du moteur électrique durant les phases de vol à basse vitesse.

Dès lors, une vitesse dite « vitesse courante » de la vitesse d'avancement de l'aéronef est déterminée et comparée à la vitesse d'avancement seuil, ladite autorisation étant donnée si ladite vitesse courante est inférieure à ladite vitesse d'avancement seuil.

La vitesse courante représente la valeur courante de la vitesse d'avancement à chaque itération de calcul. De manière général, le terme « courant » fait référence à l'itération de calcul en cours de traitement.

Cette vitesse courante est donc comparée par des méthodes usuelles de calcul à la vitesse d'avancement seuil mémorisée par le constructeur.

Par ailleurs, une phase de vol prédéterminée peut être une phase de vol dite « phase de vol à faible marge de puissance » durant laquelle au moins un moteur thermique présente une marge de puissance par rapport à une limite de puissance prédéterminée inférieure à un seuil de puissance.

Chaque moteur thermique fonctionne à un régime courant de fonctionnement. Chaque régime peut être associé à une puissance limite. Par exemple, un aéronef peut utiliser :
- un régime de décollage associant une puissance maximale au décollage PMD à une durée d'utilisation de l'ordre de cinq à dix minutes,
- un régime maximal continu associant une puissance maximale en continu PMC à une durée d'utilisation illimitée.

Des régimes de surpuissance en urgence sont aussi utilisés sur une installation motrice comprenant plusieurs moteurs thermiques pour être utilisés lorsque l'un des moteurs thermiques tombe en panne. Les régimes de surpuissance d'urgence suivant sont connus:
- un premier régime d'urgence associant une puissance de super urgence OEI30" à une durée de l'ordre de trente secondes consécutives, ce premier régime d'urgence pouvant être utilisé environ trois fois pendant un vol,
- un deuxième régime d'urgence associant une puissance maximale d'urgence OEI2' à une durée d'utilisation de l'ordre de deux minutes,
- un troisième régime d'urgence associant une puissance intermédiaire d'urgence à une durée d'utilisation couvrant la fin d'un vol après la panne d'un turbomoteur par exemple.

Dès lors, lorsqu'un régime est employé, une marge de puissance est déterminée. Cette marge de puissance sépare la puissance maximale de ce régime et la puissance courante développée à chaque itération de calcul par le moteur thermique examiné.

Si la marge de puissance est inférieure au seuil de puissance mémorisée l'autorisation d'utilisation du moteur électrique est donnée.

Par ailleurs, ladite au moins une phase de vol prédéterminée peut comporter une phase de vol dite « phase de vol monomoteur » durant laquelle un seul moteur thermique est en fonctionnement, ce seul moteur thermique fonctionnant à un régime de surpuissance d'urgence, ledit régime de surpuissance d'urgence ne pouvant être utilisé que durant une durée prédéterminée.

Par exemple, le système avionique émet ladite autorisation si un moteur thermique fonctionne selon le premier régime d'urgence précité, à savoir le régime de surpuissance d'urgence présentant le temps d'utilisation le plus faible.

Par ailleurs, la panne d'un moteur thermique peut être évaluée selon divers critères.

Ainsi, un moteur thermique peut être considéré en panne lorsque ce moteur thermique ne délivre aucune puissance.

De manière alternative ou complémentaire, un moteur thermique est considéré en panne lorsque ce moteur thermique est arrêté ou en cours d'arrêt.

Un moteur thermique est dit à l'arrêt lorsque qu'aucun organe n'est en mouvement dans ce moteur thermique.

Par exemple, un turbomoteur peut présenter un générateur de gaz suivi d'un ensemble de puissance comprenant au moins une turbine.

Le turbomoteur est alors à l'arrêt lorsque le générateur de gaz et l'ensemble de puissance ne sont pas entraînés en rotation.

Sur un moteur à pistons mettant en rotation un vilebrequin, le moteur est par exemple à l'arrêt lorsque le vilebrequin est immobile.

Le turbomoteur est par exemple considéré en cours d'arrêt lorsqu'un ordre a été donné à cet effet par un pilote.

Le moteur thermique peut être considéré en panne lorsque l'arrêt est volontaire ou involontaire.

Un arrêt volontaire peut être déterminé en surveillant un sélecteur commandant un moteur thermique, un tel sélecteur possédant une position requérant l'arrêt d'un moteur thermique.

Un arrêt involontaire peut être déterminé en surveillant des paramètres de fonctionnement du moteur thermique, tels que la vitesse de rotation d'un organe du moteur thermique par exemple.

De manière alternative ou complémentaire, un moteur thermique est considéré en panne lorsque ce moteur thermique fonctionne à un régime de ralenti.

Un moteur thermique peut prévoir un régime de ralenti. Au régime de ralenti, le moteur n'est pas à l'arrêt, mais ne délivre pas de couple aux ensembles dynamiques.

Le régime de ralenti peut avoir été enclenché de manière involontaire ou volontaire.

Un ralenti volontaire peut être déterminé en surveillant un sélecteur commandant un moteur thermique, un tel sélecteur possédant une position requérant le fonctionnement au ralenti d'un moteur thermique.

Un ralenti involontaire peut être déterminé en surveillant des paramètres de fonctionnement du moteur thermique, tels que la vitesse de rotation d'un organe du moteur thermique par exemple.

De manière alternative ou complémentaire, un moteur thermique peut être considéré en panne si la puissance développée par ce moteur thermique est gelée suite à un dysfonctionnement d'un système de régulation de débit de carburant et si le couple développé par ce moteur thermique est inférieur à un seuil de couple. L'expression « puissance développée par ce moteur thermique est gelée » signifie que la position du doseur de carburant est maintenue à la dernière position valide connue. Dès lors, sans variation des conditions extérieures de l'air ambiant, la puissance délivrée demeure constante quel que soit l'ordre donné au système de régulation de débit..

Une panne totale du système de régulation intervient lorsque, suite à un dysfonctionnement, le système de gestion d'un moteur est dans l'incapacité de réguler le débit carburant (suite à une panne de tous les capteurs de vitesse d'une turbine libre par exemple). Une panne totale d'un système de régulation de débit de carburant peut engendrer le gel de la position d'un doseur de carburant.

La puissance délivrée par un moteur suite à une panne totale de régulation peut donc être faible ou haute en fonction du moment où la panne totale est détectée.

Dès lors, un ordre de fonctionnement est donné selon la variante si le couple développé par ce moteur thermique est inférieur à un seuil de couple. Le seuil de couple peut être compris entre 10% et 100% du couple théorique à fournir au régime de fonctionnement courant du moteur thermique examiné.

De manière alternative ou complémentaire, un moteur thermique peut être considéré en panne lorsqu'une différence entre un couple développé par un moteur thermique et un couple développé par un autre moteur thermique est supérieure à une différence prédéterminée.

Si une différence de couple entre deux moteurs thermiques est supérieure à la différence prédéterminée, l'ordre de fonctionnement est émis.

La différence prédéterminée peut être comprise entre 2% et 100% du couple théorique à fournir au régime de fonctionnement courant des moteurs thermiques examinés.

Outre un procédé, l'invention vise aussi un aéronef muni d'au moins un rotor, cet aéronef comportant au moins deux moteurs thermiques et un moteur électrique aptes à entraîner en rotation le rotor.

L'aéronef est favorablement un giravion.

Dès lors, l'aéronef comporte un dispositif de régulation mettant en oeuvre le procédé décrit précédemment.

Eventuellement, le dispositif de régulation comportant un système de gestion par moteur thermique, chaque système de gestion contrôlant un moteur thermique, le dispositif de régulation comportant un système avionique communiquant avec les systèmes de gestion, ladite autorisation est générée par le système avionique, cette autorisation étant transmise à chaque système de gestion, l'ordre de fonctionnement étant émis par un système de gestion et transmis au moteur électrique.

L'ordre de fonctionnement est transmis par un système de gestion directement ou indirectement au moteur électrique.

Par exemple, le dispositif de régulation comporte au moins un organe à choisir dans la liste suivante : un système de mesure pour déterminer une vitesse d'avancement de l'aéronef, un dispositif de mesure par moteur thermique pour déterminer un couple développé par le moteur thermique, un organe de mesure par moteur thermique pour déterminer une puissance développée par le moteur thermique, un capteur par moteur thermique pour déterminer une vitesse de rotation d'un organe du moteur thermique, un dispositif de toucher pour déterminer si l'aéronef repose sur un sol, un sélecteur de commande par moteur thermique pour au moins requérir le fonctionnement d'un moteur thermique ou son arrêt ou sa mise au ralenti.

Le système de mesure peut comprendre un système anémobarométrique usuel.

L'organe de mesure et le dispositif de mesure peuvent comprendre un couplemètre, la puissance étant liée au couple mesuré. Un capteur usuel peut être utilisé pour mesurer la vitesse rotation d'un moteur.

Il est à noter que le couple, la puissance et une vitesse de rotation sont couramment mesurés sur un turbomoteur de giravion par exemple.

Enfin, le dispositif de toucher peut comporter un système agencé sur un atterrisseur. Par exemple, un dispositif de toucher peut comprendre un système mesurant l'effort exercé sur un atterrisseur. On se référera à la littérature pour obtenir la description d'un tel dispositif de toucher.

L'invention et ses avantages apparaîtront avec plus de détails dans le cadre de la description qui suit avec des exemples donnés à titre illustratif en référence aux figures annexées qui représentent :
- la figure 1, un schéma illustrant un aéronef selon l'invention, et
- la figure 2, un schéma illustrant le procédé selon l'invention.

Les éléments présents dans plusieurs figures distinctes sont affectés d'une seule et même référence.

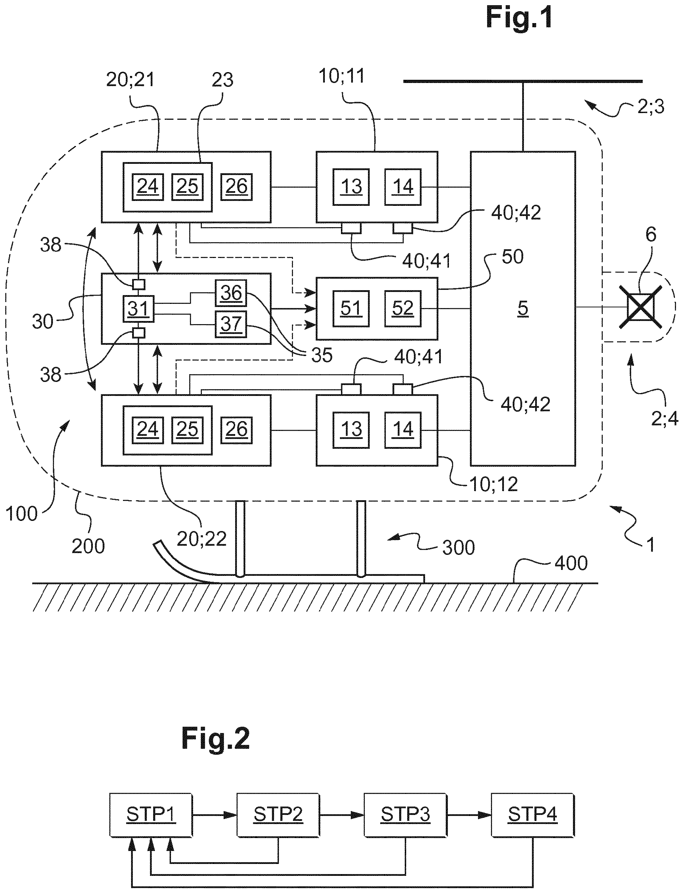

La figure 1 présente un aéronef 1 selon l'invention.

Cet aéronef 1 est muni d'une cellule 200 reposant sur un sol 400, solide ou liquide, via un atterrisseur 300.

L'atterrisseur 300 peut comprendre un train d'atterrissage à patin, ou encore à roues ou à skis par exemple. Un atterrisseur 300 peut aussi comporter des moyens de flottaison.

Par ailleurs, la cellule 200 porte un moins un rotor 2. Un tel rotor 2 peut être un rotor principal 3 participant à la sustentation voire à la propulsion de l'aéronef. Un rotor 2 peut aussi comprendre un rotor de contrôle du mouvement en lacet 4 de l'aéronef.

Selon la figure 1, l'aéronef est un giravion et en particulier un hélicoptère muni d'un rotor principal 3 et d'un rotor de contrôle du mouvement en lacet 4.

Pour mettre en mouvement chaque rotor, l'aéronef comporte une installation motrice munie d'au moins deux moteurs thermiques 10.

Par exemple, chaque moteur thermique est mécaniquement relié à une boîte de transmission de puissance principale 5. Cette boîte de transmission de puissance principale 5 met en rotation un mât rotor entraînant en rotation le rotor principal 3. De plus, la boîte de transmission de puissance principale 5 peut mettre en rotation une boîte de transmission de puissance arrière 6 entraînant en rotation le rotor de contrôle du mouvement en lacet 4.

Un tel moteur thermique 10 est par exemple un turbomoteur. Le moteur thermique comprend alors un générateur de gaz 13 suivi d'un ensemble de puissance 14. L'ensemble de puissance 14 comprend au moins une turbine entraînant mécaniquement la boîte de transmission de puissance principale 5.

Par ailleurs, l'aéronef comporte au moins un moteur électrique 50. En particulier, l'aéronef comporte un moteur électrique 50. Un tel moteur électrique 50 peut être un moteur de toute sorte utilisant une énergie électrique pour mettre en mouvement au moins un rotor.

Par exemple, chaque moteur électrique 50 est mécaniquement relié à une boîte de transmission de puissance principale 5.

A titre illustratif, le moteur électrique peut comporter un système électronique non représenté, ainsi qu'un stator 51 et un organe tournant 52.

Par ailleurs, l'aéronef comporte un dispositif de régulation 100.

Ce dispositif de régulation 100 a pour fonction de contrôler les moteurs thermiques 10 et électrique 50 en appliquant le procédé selon l'invention.

Ce dispositif de régulation comprend ainsi un système de gestion 20 par moteur thermique 10. Un système de gestion 20 peut être du type FADEC. Ainsi, un premier moteur thermique 11 est contrôlé par un premier système de gestion 21, le deuxième moteur thermique 12 étant contrôlé par un deuxième système de gestion 22.

Dès lors, un système de gestion peut comporter un calculateur de gestion 23 et un doseur de carburant 26.

Un tel calculateur de gestion 23 possède par exemple un processeur 24 ou équivalent qui exécute des instructions mémorisées dans une unité de mémoire 25. Classiquement, le calculateur de gestion applique des lois de régulation mémorisées dans l'unité de mémoire pour notamment contrôler le doseur de carburant du moteur thermique associé.

Chaque système de gestion 20 peut être relié directement ou indirectement à des moyens de mesure 40 surveillant le fonctionnant du moteur thermique associé, voire à des systèmes de mesure 35 de l'aéronef.

Ainsi, chaque système de gestion peut être relié par une liaison filaire ou non filaire à un capteur 41 mesurant une vitesse de rotation Ng du générateur de gaz 13 du moteur thermique contrôlé.

De plus, chaque système de gestion peut être relié par une liaison filaire ou non filaire à un organe 42 déterminant un couple et/ou une puissance développée par l'ensemble de puissance 14 du moteur thermique contrôlé. Par exemple, un couplemètre permet de mesurer un couple développé par l'ensemble de puissance 14 du moteur thermique contrôlé. De plus, un système usuel permet de mesurer une vitesse d'entrainement en rotation de l'ensemble de puissance 14. La puissance développée par l'ensemble de puissance 14 est alors égale au produit du couple mesuré et de la vitesse d'entrainement en rotation mesurée au niveau du couple mesuré.

Dans ces conditions, les systèmes de gestion des moteurs thermiques peuvent classiquement communiquer entre eux pour échanger des informations relatives au fonctionnement desdits moteurs thermiques.

Par ailleurs, le dispositif de régulation 100 comprend un système avionique 30 communiquant par une liaison filaire ou non filaire avec chaque moteur thermique 10 et avec le moteur électrique 50.

Ce système avionique est par exemple muni d'au moins un calculateur dit « calculateur avionique 31 » par commodité.

De plus, le système avionique comporte divers systèmes de mesure 35 permettant de déterminer des informations relatives au fonctionnement de l'aéronef.

En particulier, le calculateur avionique peut communiquer avec un système de mesure 36 apte à déterminer la vitesse d'avancement de l'aéronef. Le système de mesure 36 peut notamment inclure un système anémobarométrique et/ou un système de positionnement du type connu sous l'acronyme GPS par exemple.

Le calculateur avionique peut aussi communiquer avec un dispositif de toucher 37. Un tel dispositif de toucher 37 a pour fonction d'évaluer si l'aéronef repose sur le sol.

Un dispositif de toucher 37 peut par exemple comprendre un système déterminant un effort exercé sur un atterrisseur 300. Si cet effort est inférieur à un seuil, le dispositif de toucher 37 en déduit que l'aéronef est en vol, à savoir que l'aéronef ne repose pas sur le sol 400.

De plus, le système avionique peut comporter un sélecteur 38 de commande par moteur thermique. Par exemple, un sélecteur est un sélecteur à trois positions respectivement pour requérir le fonctionnement d'un moteur thermique ou son arrêt ou sa mise au ralenti.

Dès lors, cet aéronef 1 applique le procédé selon l'invention illustré par la figure 2.

Durant une étape initiale STP1, chaque rotor 2 est mis en mouvement par les moteurs thermiques.

Le premier moteur thermique 11 et le deuxième moteur thermique 12 entraînent conjointement les rotors 2, par le bais de boîtes de transmission de puissance 5, 6. Les systèmes de gestion 20 contrôlent les doseurs de carburant 26 en appliquant les lois de régulation adéquates.

Par contre, le moteur électrique ne fonctionne pas en mode moteur durant cette étape initiale STP1. L'organe tournant 52 ne met donc pas en mouvement les rotors 2. Eventuellement, le moteur électrique peut prélever de l'énergie sur la boîte de transmission de puissance principale 5 en fonctionnant dans un mode alternateur.

Durant une étape d'estimation de la phase de vol STP2, on génère une autorisation pour autoriser l'utilisation du moteur électrique 50 afin d'entraîner en rotation les rotors 2, uniquement si l'aéronef évolue dans une phase de vol prédéterminée.

L'émission de l'autorisation n'est pas suffisante pour utiliser le moteur électrique afin d'entraîner les rotors, mais constitue un prérequis pour cette utilisation.

Par exemple, le système avionique 30 détermine la phase de vol courante de l'aéronef à l'aide des systèmes de mesure 35, et compare cette phase de vol courante à des phases de vol prédéterminées.

Si l'aéronef évolue dans une des phases de vol prédéterminées, le système avionique transmet ladite autorisation à chaque système de gestion 20.

Selon ce procédé, au moins une phase de vol prédéterminée peut être une phase de vol qui nécessite une puissance donnée pour entraîner les rotors 2, cette puissance donnée étant supérieure à la puissance maximale délivrée par l'ensemble des moteurs thermiques 10 en cas de panne d'un desdits moteurs thermiques 10.

Par conséquent, une phase de vol prédéterminée est une phase de vol durant laquelle chaque moteur thermique pris isolément est insuffisant pour obtenir la puissance donnée nécessaire pour maintenir la mission en cours.

En outre, l'autorisation peut être inhibée lorsque l'aéronef 1 repose sur le sol 400. Par suite, une phase de vol prédéterminée est selon cette option une phase se produisant en vol au sens strict du terme « vol », à savoir au-dessus du sol.

Dès lors, le calculateur avionique 31 sollicite le dispositif de toucher 37 pour déterminer si l'aéronef repose sur le sol.

Par exemple, au moins une phase de vol prédéterminée comporte une phase de vol à basse vitesse. Une phase de vol est dite « à basse vitesse » lorsque l'aéronef se déplace avec une vitesse d'avancement inférieure à une vitesse d'avancement seuil.

Dès lors, le calculateur avionique 31 sollicite le système de mesure 36 pour déterminer une valeur dite « vitesse courante » de la vitesse d'avancement de l'aéronef 1.

Le calculateur avionique 31 compare cette vitesse courante à une vitesse d'avancement seuil mémorisée dans une mémoire du calculateur avionique 31. L'autorisation est alors donnée par le calculateur avionique 31 si la vitesse courante est inférieure à la vitesse d'avancement seuil.

Par ailleurs, ladite au moins une phase de vol prédéterminée peut comporter une phase de vol à faible marge de puissance. Une phase de vol est dite « à faible marge de puissance » lorsqu'au moins un moteur thermique 10 présente une marge de puissance par rapport à une limite de puissance prédéterminée inférieure à un seuil de puissance.

Chaque système de gestion transmet au système avionique une puissance dite « puissance courante » développée par le moteur thermique correspondant. De plus, le système de gestion peut transmette une limite de puissance à respecter pour le régime de fonctionnement courant du moteur thermique.

Dès lors, le calculateur avionique 31 en déduit une marge de puissance courante pour chaque moteur thermique. Le calculateur avionique 31 compare alors cette marge de puissance courante à une limite de puissance mémorisée. Si cette marge de puissance courante est inférieure à la limite de puissance, alors le calculateur avionique émet ladite autorisation.

En outre, ladite au moins une phase de vol prédéterminée peut comporter une phase de vol monomoteur. Une phase de vol est dite « monomoteur » lorsqu'un seul moteur thermique 10 est en fonctionnement, ce seul moteur thermique 10 fonctionnant à un régime de surpuissance d'urgence, le régime de surpuissance d'urgence ne pouvant être utilisé que durant une durée prédéterminée.

Dès lors, les systèmes de gestion indiquent au système avionique qu'un moteur est en panne. Le système de gestion du moteur thermique en fonctionnement peut préciser le régime de fonctionnement en cours.

En effet, le moteur thermique peut fonctionner selon une pluralité de régimes de surpuissance différents.

Dès lors, le système avionique émet l'autorisation d'utiliser le moteur électrique si le moteur thermique 10 en fonctionnement met en oeuvre un régime de surpuissance d'urgence particulier, à savoir un régime de surpuissance d'urgence ne pouvant être utilisé que durant une durée prédéterminée.

Durant une étape d'estimation de la santé des moteurs thermique STP3, on détermine si un moteur thermique doit être considéré en panne.

Si un moteur thermique est considéré en panne et si ladite autorisation a été donnée, on génère un ordre de fonctionnement pour requérir le fonctionnement du moteur électrique 50.

Par contre, si un moteur thermique 10 est considéré en panne et si ladite autorisation n'est pas donnée, l'ordre de fonctionnement n'est pas émis.

Par exemple, l'ordre de fonctionnement est émis par un système de gestion 20. Cet ordre de fonctionnement peut être émis soit par le système de gestion considérant la panne d'un moteur thermique, soit par l'autre système de gestion par exemple.

Cet ordre de fonctionnement est transmis durant une étape d'hybridation STP4 au moteur électrique. Le moteur électrique fonctionne alors en mode moteur pour participer à l'entraînement en rotation des rotors 2.

L'ordre de fonctionnement peut être transmis directement d'un système de gestion vers le moteur électrique, ou indirectement au travers du système avionique 30.

Lors de l'étape d'estimation de la santé des moteurs thermique STP3, un moteur thermique 10 peut être considéré en panne lorsque ce moteur thermique 10 ne délivre aucune puissance.

Par exemple, le système de gestion d'un moteur thermique détermine la puissance courante développée par ce moteur thermique, en sollicitant le dispositif de mesure 42.

Si cette puissance courante est nulle et si ladite autorisation a été émise, le système de gestion délivre l'ordre de fonctionnement.

Un moteur thermique 10 peut aussi être considéré en panne lorsque ce moteur thermique 10 est arrêté ou en cours d'arrêt, volontairement ou involontairement.

Un système de gestion peut détecter par exemple que le générateur de gaz d'un turbomoteur ou que le vilebrequin d'un moteur à piston est immobile au travers d'informations provenant d'un capteur 41.

Une telle panne peut être détectée de manière usuelle, et peut induire l'émission d'une alarme dite « FAIL DOWN » en langue anglaise.

Si un pilote manoeuvre le sélecteur 38 pour arrêter volontairement un moteur thermique, le système de gestion de ce moteur thermique arrête le moteur thermique associé. De plus, ce système de gestion émet l'ordre de fonctionnement si ladite autorisation a été émise.

Un moteur thermique peut aussi est considéré en panne lorsque ce moteur thermique fonctionne à un régime de ralenti.

Un système de gestion peut détecter par exemple que le générateur de gaz d'un turbomoteur est mis en rotation à une vitesse de ralenti prédéterminée.

Une telle panne peut être détectée de manière usuelle, et peut induire l'émission d'une alarme dite « FAIL IDLE » en langue anglaise.

Si un pilote manoeuvre le sélecteur 38 pour mettre au ralenti un moteur thermique, le système de gestion de ce moteur thermique met donc au ralenti le moteur thermique associé. De plus, ce système de gestion émet l'ordre de fonctionnement si ladite autorisation a été émise.

Par ailleurs, un moteur thermique 10 est considéré en panne si la puissance développée par ce moteur thermique 10 est gelée suite à un dysfonctionnement d'un système de régulation de débit de carburant 23, 36 et si le couple développé par ce moteur thermique 10 est inférieur à un seuil de couple.

Le système de gestion d'un moteur thermique peut ainsi repérer un gel de la puissance développée par le moteur thermique voisin, alors que le niveau de couple exercé par ce moteur voisin est inférieur à un seuil de couple mémorisé. Ce système de gestion émet alors l'ordre de fonctionnement si ladite autorisation est émise.

Une telle panne peut être détectée de manière usuelle, et peut induire l'émission d'une alarme dite « FAIL FREEZE » en langue anglaise.

Un moteur thermique 10 est aussi considéré en panne lorsqu'une différence entre un couple développé par un moteur thermique 10 et un couple développé par un autre moteur thermique 10 est supérieure à une différence prédéterminée.

Les systèmes gestion communiquent entre eux pour comparer les couples développés par les moteurs thermiques. Si une différence importante est relevée entre ces couples et si ladite autorisation est émise, un système de gestion émet alors l'ordre de fonctionnement.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit dans le jeux de revendications.

## Revendications

1. Procédé pour entraîner en rotation un rotor (2) d'un aéronef (1), ledit aéronef (1) comportant au moins deux moteurs thermiques (10) et un moteur électrique (50) aptes à entraîner en rotation ledit rotor (2),
**caractérisé en ce que** les étapes suivantes sont réalisées successivement :
- on entraîne ledit rotor (2) en sollicitant lesdits moteurs thermiques (10) conjointement,
- on génère une autorisation uniquement durant au moins une phase de vol prédéterminée, ladite autorisation autorisant l'utilisation du moteur électrique (50) afin d'entraîner en rotation ledit rotor (2), ladite au moins une phase de vol prédéterminée comportant une phase de vol à basse vitesse durant laquelle ledit aéronef (1) a une vitesse d'avancement inférieure à une vitesse d'avancement seuil
- lorsque ladite autorisation est générée, on génère un ordre de fonctionnement pour requérir le fonctionnement dudit moteur électrique (50) si un desdits moteurs thermiques (10) est considéré en panne,
- lorsque ledit ordre de fonctionnement est généré, on entraîne ledit rotor (2) conjointement avec chaque moteur thermique (10) qui n'est pas considéré en panne et ledit moteur électrique (50).

2. Procédé selon la revendication 1,
**caractérisé en ce que** ledit aéronef (1) comportant un système de gestion (20) par moteur thermique (10) ainsi qu'un système avionique (30) communiquant avec lesdits systèmes de gestion (20), ladite autorisation est générée par le système avionique (30), cette autorisation étant transmise à chaque système de gestion (20), ledit ordre de fonctionnement étant émis par un système de gestion (20) et transmis au moteur électrique (50).

3. Procédé selon l'une quelconque des revendications 1 à 2,
**caractérisé en ce que** si un moteur thermique (10) est considéré en panne et si ladite autorisation n'est pas donnée, le moteur électrique (50) n'est pas sollicité pour entraîner le rotor (2).

4. Procédé selon l'une quelconque des revendications 1 à 3,
**caractérisé en ce que** chaque phase de vol prédéterminée est une phase de vol qui nécessite une puissance donnée pour entraîner ledit rotor (2), ladite puissance donnée étant inférieure à la puissance maximale délivrée par lesdits moteurs thermiques (10) lorsqu'un desdits moteurs thermiques (10) est considéré en panne.

5. Procédé selon l'une quelconque des revendications 1 à 4,
**caractérisé en ce que** ladite autorisation est inhibée lorsque l'aéronef (1) repose sur le sol (400).

6. Procédé selon l'une quelconque des revendications 1 à 4,
**caractérisé en ce qu'**on détermine une vitesse dite « vitesse courante » de la vitesse d'avancement de l'aéronef (1) et on compare ladite vitesse courante à ladite vitesse d'avancement seuil, ladite autorisation étant donnée si ladite vitesse courante est inférieure à ladite vitesse d'avancement seuil.

7. Procédé selon l'une quelconque des revendications 1 à 6, **caractérisé en ce qu'**une phase de vol prédéterminée est une phase de vol à faible marge de puissance durant laquelle au moins un moteur thermique (10) présente une marge de puissance par rapport à une limite de puissance prédéterminée inférieure à un seuil de puissance.

8. Procédé selon l'une quelconque des revendications 1 à 7,
**caractérisé en ce qu'**une phase de vol prédéterminée est une phase de vol monomoteur durant laquelle un seul moteur thermique (10) est en fonctionnement, ce seul moteur thermique (10) fonctionnant à un régime de surpuissance d'urgence, ledit régime de surpuissance d'urgence ne pouvant être utilisé que durant une durée prédéterminée.

9. Procédé selon l'une quelconque des revendications 1 à 8,
**caractérisé en ce qu'**un moteur thermique (10) est considéré en panne lorsque ce moteur thermique (10) ne délivre aucune puissance.

10. Procédé selon l'une quelconque des revendications 1 à 9,
**caractérisé en ce qu'**un moteur thermique (10) est considéré en panne lorsque ce moteur thermique (10) est arrêté ou en cours d'arrêt.

11. Procédé selon l'une quelconque des revendications 1 à 10,
**caractérisé en ce qu'**un moteur thermique est considéré en panne lorsque ce moteur thermique fonctionne à un régime de ralenti.

12. Procédé selon l'une quelconque des revendications 1 à 11,
**caractérisé en ce qu'**un moteur thermique (10) est considéré en panne si la puissance développée par ce moteur thermique (10) est gelée suite à un dysfonctionnement d'un système de régulation de débit de carburant (23, 36) et si le couple développé par ce moteur thermique (10) est inférieur à un seuil de couple.

13. Procédé selon l'une quelconque des revendications 1 à 12,
**caractérisé en ce qu'**un moteur thermique (10) est considéré en panne lorsqu'une différence entre un couple développé par un moteur thermique (10) et un couple développé par un autre moteur thermique (10) est supérieure à une différence prédéterminée.

14. Aéronef (1) muni d'au moins un rotor (2), ledit aéronef (1) comportant au moins deux moteurs thermiques (10) et un moteur électrique (50) aptes à entraîner en rotation ledit rotor (2),
**caractérisé en ce que** ledit aéronef (1) comporte un dispositif de régulation (100) mettant en oeuvre le procédé selon l'une quelconque des revendications précédentes.

15. Aéronef selon la revendication 14,
**caractérisé en ce que** ledit dispositif de régulation (100) comportant un système de gestion (20) par moteur thermique (10), chaque système de gestion (20) contrôlant un moteur thermique (10), ledit dispositif de régulation (100) comportant un système avionique (30) communiquant avec lesdits systèmes de gestion (20), ladite autorisation est générée par le système avionique (30), cette autorisation étant transmise à chaque système de gestion (20), ledit ordre de fonctionnement étant émis par un système de gestion (20) et transmis au moteur électrique (50).

16. Aéronef selon la revendication 15,
**caractérisé en ce que** ledit dispositif de régulation (100) comporte au moins un organe à choisir dans la liste suivante : un système de mesure (36) pour déterminer une vitesse d'avancement de l'aéronef (1), un dispositif de mesure (42) par moteur thermique (10) pour déterminer un couple développé par le moteur thermique (10), un organe de mesure (42) par moteur thermique (10) pour déterminer une puissance développée par le moteur thermique (10), un capteur (41) par moteur thermique (10) pour déterminer une vitesse de rotation d'un organe (13, 14) du moteur thermique (10), un dispositif de toucher (37) pour déterminer si l'aéronef (1) repose sur un sol (400).

## Patentansprüche

1. Verfahren zum Drehantreiben eines Rotors (2) eines Fluggeräts (1), wobei das Fluggerät (1) mindestens zwei Verbrennungsmotoren (10) und einen Elektromotor (50) umfasst, die in der Lage sind, den Rotor (2) drehanzutreiben,
**dadurch gekennzeichnet, dass** die folgenden Schritte nacheinander ausgeführt werden:
Antreiben des Rotors (2) durch gemeinsames Beanspruchen der Verbrennungsmotoren (10),
Erzeugen einer Berechtigung nur während mindestens einer vorgegebenen Flugphase, wobei die Berechtigung die Nutzung des Elektromotors (50) zum Drehantreiben des Rotors (2) gestattet, wobei die mindestens eine vorgegebene Flugphase eine langsame Flugphase beinhaltet, in der das Fluggerät (1) eine Vorwärtsgeschwindigkeit unterhalb einer Schwellenvorwärtsgeschwindigkeit aufweist,
wenn die Berechtigung erzeugt wird,
Erzeugen eines Betriebsbefehls, um den Betrieb des Elektromotors (50) anzuordnen, wenn einer der Verbrennungsmotoren (10) als defekt angesehen wird,
wenn der Betriebsbefehl erzeugt wird, Antreiben des Rotors (2) zusammen mit jedem Verbrennungsmotor (10), der nicht als defekt angesehen wird, und dem Elektromotor (50).

2. Verfahren nach Anspruch 1,
**dadurch gekennzeichnet, dass** das Flugzeug (1) ein Managementsystem (20) pro Verbrennungsmotor (10) sowie ein Avioniksystem (30) umfasst, das mit den Managementsystemen (20) kommuniziert, wobei die Berechtigung durch das Avioniksystem (30) erzeugt wird, und
diese Berechtigung an jedes Managementsystem (20) übertragen wird,
wobei der Betriebsbefehl von einem Managementsystem (20) ausgegeben und an den Elektromotor (50) übertragen wird.

3. Verfahren nach einem der Ansprüche 1 bis 2,
**dadurch gekennzeichnet, dass**, wenn ein Verbrennungsmotor (10) als defekt betrachtet wird und die Berechtigung nicht erteilt wird, der Elektromotor (50) nicht zum Antreiben des Rotors (2) beansprucht wird.

4. Verfahren nach einem der Ansprüche 1 bis 3,
**dadurch gekennzeichnet, dass** jede vorgegebene Flugphase eine Flugphase ist, die eine gegebene Leistung zum Antreiben des Rotors (2) erfordert, wobei die gegebene Leistung geringer ist als die von den Verbrennungsmotoren (10) abgegebene maximale Leistung, wenn einer der Verbrennungsmotoren (10) als defekt betrachtet wird.

5. Verfahren nach einem der Ansprüche 1 bis 4,
**dadurch gekennzeichnet, dass** die Berechtigung unterdrückt wird, wenn das Fluggerät (1) auf dem Boden (400) ruht.

6. Verfahren nach einem der Ansprüche 1 bis 4,
**dadurch gekennzeichnet, dass** eine als "aktuelle Geschwindigkeit" bezeichnete Geschwindigkeit der Vorwärtsgeschwindigkeit (1) des Flugzeugs bestimmt wird und die aktuelle Geschwindigkeit mit der Schwellenvorwärtsgeschwindigkeit verglichen wird, und dass die Genehmigung erteilt wird, wenn die aktuelle Geschwindigkeit niedriger als die Schwellenvorwärtsgeschwindigkeit ist.

7. Verfahren nach einem der Ansprüche 1 bis 6,
**dadurch gekennzeichnet, dass** eine vorgegebene Flugphase eine Flugphase mit einer geringen Leistungsreserve ist, während derer mindestens ein Verbrennungsmotor (10) eine Leistungsreserve in Bezug auf eine vorgegebene Leistungsgrenze unterhalb einer Leistungsschwelle aufweist.

8. Verfahren nach einem der Ansprüche 1 bis 7,
**dadurch gekennzeichnet, dass** eine vorbestimmte Flugphase eine einmotorige Flugphase ist, in der nur ein Verbrennungsmotor (10) in Betrieb ist, wobei dieser einzige Verbrennungsmotor (10) in einem Notüberlastzustand arbeitet, wobei der Notüberlastzustand nur für eine vorbestimmte Zeit verwendet werden kann.

9. Verfahren nach einem der Ansprüche 1 bis 8,
**dadurch gekennzeichnet, dass** ein Verbrennungsmotor (10) als defekt betrachtet wird, wenn dieser Verbrennungsmotor (10) keine Leistung liefert.

10. Verfahren nach einem der Ansprüche 1 bis 9,
**dadurch gekennzeichnet, dass** ein Verbrennungsmotor (10) als defekt betrachtet wird, wenn dieser Verbrennungsmotor (10) gestoppt wird oder gestoppt ist.

11. Verfahren nach einem der Ansprüche 1 bis 10,
**dadurch gekennzeichnet, dass** ein Verbrennungsmotor als defekt betrachtet wird, wenn der Verbrennungsmotor in einem Verzögerungsbetriebszustand betrieben wird.

12. Verfahren nach einem der Ansprüche 1 bis 11,
**dadurch gekennzeichnet, dass** ein Verbrennungsmotor (10) als defekt betrachtet wird, wenn die von diesem Verbrennungsmotor (10) entwickelte Leistung als Folge einer Fehlfunktion eines Kraftstoffdurchflusskontrollsystems (23, 36) eingefroren wird und wenn das von diesem Verbrennungsmotor (10) entwickelte Drehmoment unterhalb eines Drehmomentschwellenwerts liegt.

13. Verfahren nach einem der Ansprüche 1 bis 12,
**dadurch gekennzeichnet, dass** ein Verbrennungsmotor (10) als defekt betrachtet wird, wenn eine Differenz zwischen einem von einem Verbrennungsmotor (10) entwickelten Drehmoment und einem von einem anderen Verbrennungsmotor (10) entwickelten Drehmoment größer als eine vorbestimmte Differenz ist.

14. Fluggerät (1) mit mindestens einem Rotor (2), wobei das Fluggerät (1) mindestens zwei Verbrennungsmotoren (10) und einen Elektromotor (50) umfasst, die in der Lage sind, den Rotor (2) drehanzutreiben,
**dadurch gekennzeichnet, dass** das Flugzeug (1) eine Steuervorrichtung (100) beinhaltet, die das Verfahren gemäß einem der vorhergehenden Ansprüche durchführt.

15. Fluggerät nach Anspruch 14,
**dadurch gekennzeichnet, dass** die Steuervorrichtung (100) ein Managementsystem (20) für jeden Verbrennungsmotor (10) umfasst, wobei jedes Managementsystem (20) einen Verbrennungsmotor (10) steuert, wobei die Steuervorrichtung (100) ein Avioniksystem (30) umfasst, das mit den Managementsystemen (20) kommuniziert, wobei die Berechtigung durch das Avioniksystem (30) erzeugt wird, die Berechtigung an jedes Managementsystem (20) übertragen wird, und der Betriebsbefehl durch ein Managementsystem (20) ausgegeben und an den Elektromotor (50) übertragen wird.

16. Fluggerät nach Anspruch 15,
**dadurch gekennzeichnet, dass** die Steuervorrichtung (100) mindestens ein aus der nachstehenden Liste auszuwählendes Element umfasst:
ein Messsystem (36) zum Bestimmen einer Vorwärtsgeschwindigkeit des Fluggeräts (1),
eine Messvorrichtung (42) pro Verbrennungsmotor (10) zum Bestimmen eines von dem Verbrennungsmotor (10) entwickelten Drehmoments,
ein Messelement (42) pro Verbrennungsmotor (10) zum Bestimmen einer von dem Verbrennungsmotor (10) entwickelten Leistung,
ein Sensor (41) pro Verbrennungsmotor (10) zum Bestimmen einer Drehzahl einer Komponente (13, 14) des Verbrennungsmotors (10),
eine Berührungsvorrichtung (37) zum Bestimmen, ob das Fluggerät (1) auf einem Boden (400) ruht.

## Claims

1. Method of driving rotation of a rotor (2) of an aircraft (1), the aircraft (1) comprising at least two fuel-burning engines (10) and an electric motor (50), these being suitable for driving rotation of the rotor (2),
**characterised in that** the following steps are carried out one after the other:
- driving the rotor (2) by using the fuel-burning engines (10) together;
- generating an authorisation only during at least one predetermined stage of flight, the authorisation authorising the use of the electric motor (50) to drive the rotor (2) in rotation, the at least one predetermined stage of flight comprising a stage of flight at low speed during which the aircraft (1) has a speed of advance less than a threshold speed of advance;
- generating, when the authorisation is generated, an operation order to require the electric motor (50) to operate if one of the fuel-burning engines (10) is considered as failed; and
- driving, when the operation order is generated, the rotor (2) together with each fuel-burning engine (10) that is not considered as failed and the electric motor (50).

2. The method according to Claim 1,
**characterised in that** the aircraft (1) has one management system (20) per fuel-burning engine (10) and an avionics system (30) communicating with the management systems (20), the authorisation being generated by the avionics system (30), the authorisation being transmitted to each management system (20), the operation order being issued by a management system (20) and transmitted to the electric motor (50).

3. Method according to either of Claims 1 or 2,
**characterised in that** if a fuel-burning engine (10) is considered failed and if the authorisation is not given, the electric motor (50) is not used to drive the rotor (2).

4. Method according to any one of Claims 1 to 3,
**characterised in that** each predetermined stage of flight is a stage of flight that requires a given power for driving the rotor (2), the given power being less than the maximum power delivered by the fuel-burning engines (10) when one of the engines is considered as failed.

5. Method according to any one of Claims 1 to 4,
**characterised in that** the authorisation is inhibited when the aircraft (1) is on the ground (400).

6. Method according to any one of Claims 1 to 4,
**characterised in that** a "current speed" is determined for the speed of advance of the aircraft (1) and the current speed is compared with the threshold speed of advance, the authorisation being given if the current speed is less than the threshold speed of advance.

7. Method according to any one of Claims 1 to 6,
**characterised in that** a predetermined stage of flight is a stage of flight with little power margin during which at least one fuel-burning engine (10) presents a power margin relative to a predetermined power limit that is less than a power threshold.

8. Method according to any one of Claims 1 to 7,
**characterised in that** a predetermined stage of flight is a single-engined stage of flight during which only a single one of the fuel-burning engines (10) is in operation, this single fuel-burning engine (10) operating at a contingency overpower rating, the contingency overpower rating being usable for only a predetermined duration.

9. Method according to any one of Claims 1 to 8,
**characterised in that** a fuel-burning engine (10) is considered as failed when this fuel-burning engine (10) is delivering no power.

10. Method according to any one of Claims 1 to 9,
**characterised in that** a fuel-burning engine (10) is considered as failed when this fuel-burning engine (10) has stopped or is in the process of stopping.

11. Method according to any one of Claims 1 to 10, **characterised in that** a fuel-burning engine is considered as failed when this fuel-burning engine is idling.

12. Method according to any one of Claims 1 to 11,
**characterised in that** a fuel-burning engine (10) is considered as failed when the power developed by the fuel-burning engine (10) is frozen as a result of a malfunction of a system for regulating the flow of fuel (23, 36) and if the torque developed by the fuel-burning engine is less than a torque threshold.

13. Method according to any one of Claims 1 to 12,
**characterised in that** a fuel-burning engine (10) is considered as failed when the difference between the torque developed by one fuel-burning engine (10) and the torque developed by another one of the fuel-burning engines (10) is greater than a predetermined difference.

14. Aircraft (1) equipped with at least one rotor (2), the aircraft (1) comprising at least two fuel-burning engines (10) and an electric motor (50), these being suitable for driving rotation of the rotor (2),
**characterised in that** the aircraft (1) comprises a regulator (100) implementing the process according to any one of the preceding claims.

15. Aircraft according to Claim 14,
**characterised in that** the regulator (100) comprises one management system (20) per fuel-burning engine, each management system (20) controlling one fuel-burning engine (10), the regulator (100) comprising an avionics system (30) communicating with the management systems (20), the avionics system (30) generating the authorisation, this authorisation being transmitted to each management system (20), the operation order being issued by a management system (20) and transmitted to the electric motor (50).

16. Aircraft according to Claim 15,
**characterised in that** the regulator (100) comprises at least one member selected from the following list: a measurement system (36) for determining a speed of advance of the aircraft (1), one measurement device (42) per fuel-burning engine (10) for determining the torque developed by the fuel-burning engine (10), one measurement device (42) per fuel-burning engine (10) for determining the power developed by the fuel-burning engine, one sensor (41) per fuel-burning engine (10) for determining the speed of rotation of a member (13, 14) of the fuel-burning engine (10), and a touch device (37) for determining if the aircraft (1) is standing on ground (400).
